# EUROPEAN PATENT APPLICATION

(11) **EP 2 490 241 A1**
(43) Date of publication of application: **22.08.2012**
(21) Application number: 11464014.7
(22) Date of filing: 13.09.2011
(51) Int. Cl.: H01H 35/14, B60K 28/14

(54) **Interrupter device for interrupting current flow in a current path and supply circuit of an electric or hybrid-electric power train for a vehicle including such an interrupter device**

(71) Applicant: Continental Automotive GmbH, 30165 Hannover (DE)
(72) Inventor: Musatini, Theodor Paulus, 700590 Iasi (RO)

(57) **Abstract**

The invention relates to an interrupter device (12) for interrupting current flow in a current path (10), especially a current path (10) in a supply circuit of an electric or hybrid-electric power train for a vehicle, in dependence of an acceleration of the device (12). The device (12) comprises an interrupter switch (14) and an acceleration detector (16) triggering the interrupter switch (14), wherein the interrupter switch (14) comprises a retaining device (22) for retaining the switch (14) in a current conducting state. According to the invention, the acceleration detector (16) comprises a mass element (24) for breaking the retaining device (22) upon acceleration along at least one predefined axis, wherein the breakage of the retaining device (22) triggers an activation of the interrupter switch (14).

The invention further relates to a corresponding supply circuit of an electric or hybrid-electric power train for a vehicle, the circuit comprising at least one electrical energy storage device and at least one current path (10).

## Description

The invention relates to an interrupter device for interrupting current flow in a current path, especially in a current path of a supply circuit for an electric or hybrid-electric power train of a vehicle, in dependence of an acceleration of the device. The interrupter device comprises an interrupter switch and an acceleration detector triggering the interrupter switch, wherein the interrupter switch comprises a retaining device for retaining the switch in a current conducting state.

When a vehicle with an electric or hybrid-electric power train, e.g. an electrical/hybrid car, has an accident, the High Voltage battery can supply voltages up to 400 V into the frame and/or electrical circuits of the vehicle, injuring or killing the survivors or the rescue team.

Document US 6, 417, 579 B1 shows an electrical system with security battery disconnection including a circuit breaker coupled to a crash sensor.

It is an object of the invention to provide a simple, compact and robust interrupter device for interrupting current flow in a current path, and to provide a supply circuit comprising a corresponding current path with said interrupter device.

This object is achieved by the present invention as defined in claims 1 and 9.

According to the invention, the acceleration detector of the interrupter device comprises a mass element for breaking the retaining device upon acceleration along at least one predefined axis, wherein the breakage of the retaining device triggers an activation of the interrupter switch.

The interrupter switch is also known as a circuit breaker, a contact breaker, an isolating switch, a breaking switch or a disconnecting switch. The retaining device is a breakable or fragile retaining device for retaining the switch in a current conducting state when the interrupter switch is not triggered.

The acceleration is, e.g. , a suddenly occurring high acceleration caused by a shock or another impulse transfer.

Preferably, the acceleration detector and the interrupter switch are coupled directly (no intermediate element) . More preferably, the acceleration detector and the interrupter switch have at least one common component, namely the breakable retaining device and/or the mass element, which element determines functional features of the acceleration detector and the interrupter switch.

According to a preferred embodiment of the invention, the retaining device is a device made of ceramics and/or glass or at least comprises a breakable part made of ceramics and/or glass.

According to another preferred embodiment of the invention, the retaining device comprises at least one predetermined breaking point. This at least one breaking point is preferably defined by a material diminution or a material change.

According to yet another preferred embodiment of the invention, the mass element is mounted on the retaining device. Preferably the mass element is mechanically coupled to a fixed point of the interrupter device via the interposed retaining device.

In accordance with a preferred embodiment of the invention, the interrupter switch further comprises a switching element for carrying the current of the current path in the current conducting state and an actuator for shifting the switching element after the triggering. The actuator activates the interrupter switch after the triggering and opens the switch by moving the switching element.

In accordance with another preferred embodiment of the invention, the actuator is a spring device, especially a compression spring.

According to yet another preferred embodiment of the invention, the retaining device comprises a tube-like element. Especially, this tube-like element is or comprises the breakable part of the retaining element. Preferably, the retaining device comprises at least one component of an adjusting device, e.g. an adjusting bolt.

Especially, the actuator is arranged/located in the interior of the tube-like element.

The invention further relates to a supply circuit of an electric or hybrid-electric power train for a vehicle. This circuit comprises at least one electrical energy storage device and at least one current path including an aforementioned interrupter device.

According to a preferred embodiment of the invention, the supply circuit comprises at least two electrical energy storage devices, wherein the current path or at least one of the current paths is a current path for electrical connecting the electrical energy storage devices. An interrupter device in at least one current path electrically connecting the energy storage devices will reduce the effective total voltage in case of a crash.

The at least one storage device preferably is an accumulator and/or a battery and/or a power capacitor.

In the drawings
- Figure 1: depicts a cross-sectional view through an interrupter device according to an embodiment of the invention in the non-triggered state;
- Figure 2: depicts a cross-sectional view through the interrupter device of Fig. 1 during the triggering process; and
- Figure 3: depicts a cross-sectional view through the interrupter device of Fig. 1 in the triggered and activated state.

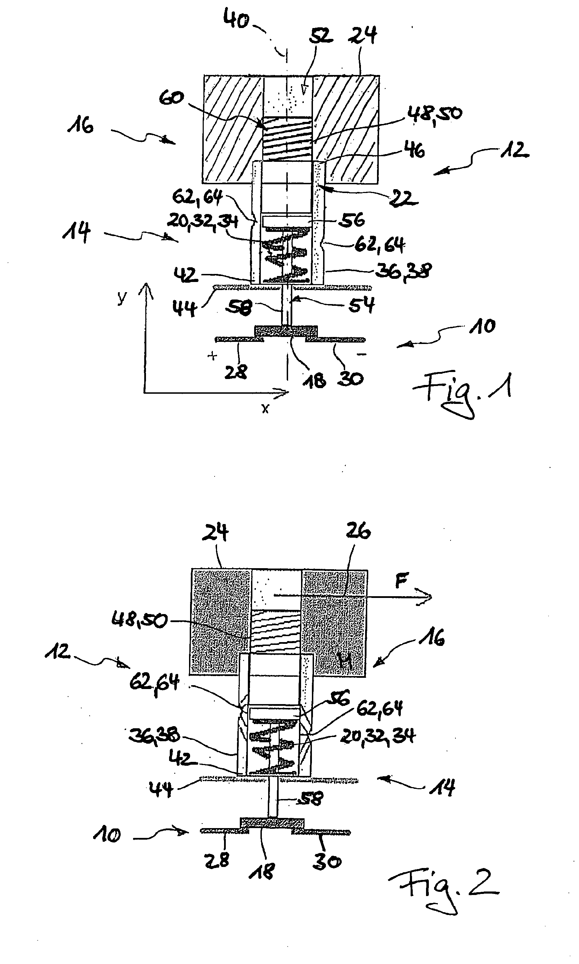

Figure 1 shows a current path 10 of an electrical circuit and an acceleration triggered interrupter device 12 wired into this current path 10. The interrupter device 12 comprises an interrupter switch 14 and an acceleration detector 16 triggering the interrupter switch 14. The acceleration detector 16 preferably is a crash detector. The interrupter switch 14 comprises an electro conductive switching element 18 for carrying the current in a current conducting state of the switch 14, an actuator 20 for shifting the switching element 18 and a retaining device 22 for retaining the switch 14 in a current conducting state. The retaining device 22 includes at least one part made of a breakable or fragile material.

The acceleration detector 16 comprises a mass element 24 with mass M for breaking the retaining device 22 of the interrupter switch 14 upon acceleration a predefined axis (e. g. arrow 26 in Fig. 2 parallel to the x-axis). The breakage of the retaining device 22 triggers the activation of the interrupter switch 14 by releasing or activating the actuator 20.

The switching element 18 is a power bridge for connecting et least two current carrying elements 28, 30 within the current path 10. The actuator 20 is a spring device 32, more precisely a compression spring 34. The retaining device 22 preferably is made of ceramics and/or glass or at least comprises a breakable part made of ceramics and/or glass. One section 36 (one part) of the retaining device 22 is formed like a tube or hollow cylinder (tube-like element 38) . This tube like element is the breakable part of the retaining device 22. The axis 40 of the tube-like element 38 is aligned in parallel with the y-Axis.

The end 42 of the one section 38 is mechanically connected to a carrying structure 44, e.g. a casing of the electrical circuit or a casing of the interrupter device 12. The other end 46 of the retaining device 22 is connected to the mass element 24. The connection between the tube-like element 38 of the retaining device 22 and the mass element 24 is realized by an adhesive connection.

The retaining device 22 further comprises another section 48 being an adjusting bolt 50 of an adjusting device. This adjusting bolt 50 is screwed into the mass element 24, wherein a male thread of the adjusting bolt 50 engages into a female thread in a hole 52 or blind hole of the mass element 24.

The interrupter switch 14 further comprises a support device 54 for holding/supporting the switching element 18. The support device 54 comprises a base element 56 formed as a base plate and a shaft 58, wherein the shaft 58 connects the base element 56 and the switching element 18 and is aligned with the axis 40 of the tube-like element 38. The shaft 58 is made of an electrically isolating material. The spring device 32 encompasses the shaft 58, wherein it is located between the base element 56 and the adjusting device 48 on the one side and the carrying structure 44 on the other side.

One end of the spring device 32 supports on the base element 56 and the other end of the spring device 32 supports on the carrying structure 44. Due to the resilience of the spring device 32, the base element 56 is pressed to the rear side of the adjusting device 48 inside the section 36 formed as a tube-like element 38. The adjusting bolt 50 pushes the arrangement comprising the base element 56, the shaft 58 and the switching element 18 to close the circuit between the current carrying elements 28, 30 and it is compressing the spring device 32. The adjusting device uses the screw connection 60 of the threads to tune the pressure applied by the switching element 18 on the base element 56 and to adapt the interrupter switch to the distance between the current carrying elements 28, 30 and the carrying structure.

The retaining device 22 further comprises predetermined breaking points 62 formed as grooves 64 or channels. These grooves 64 allow the break of the retaining device 22 when the force F (arrow 26) is greater than a predetermined threshold. Therefore, from the technical function, the retaining device 22 is part of the interrupter switch 14 and the acceleration detector 16. On the other hand, the mass element 24 supports the adjusting bolt 50 of the retaining device 22. Therefore, from the technical function, the mass element 24 is also part of the interrupter switch 14 and the acceleration detector 16.

Figure 1 shows a cross-sectional view through the interrupter device 12 in its non-triggered state. The switching element 18 (still) electrically connects the two current carrying elements 28, 30 and maintains a current flow in the current path 10.

Fig. 2 shows a cross-sectional view through the interrupter device 12 during the triggering process. The carrying structure 44 is accelerated in opposite direction to the x-axis drawn in Fig. 1. Due to the inertia of the mass M of mass element 24, a force F (arrow 26) is applied to the interrupter device 12, especially the breakable part of the retaining device 22 (the tube-like element), which acts as a lever. If the force F is greater than the threshold, the retaining device 22 breaks at the predetermined breaking points 62 and splits into (at least) two parts 66, 68.

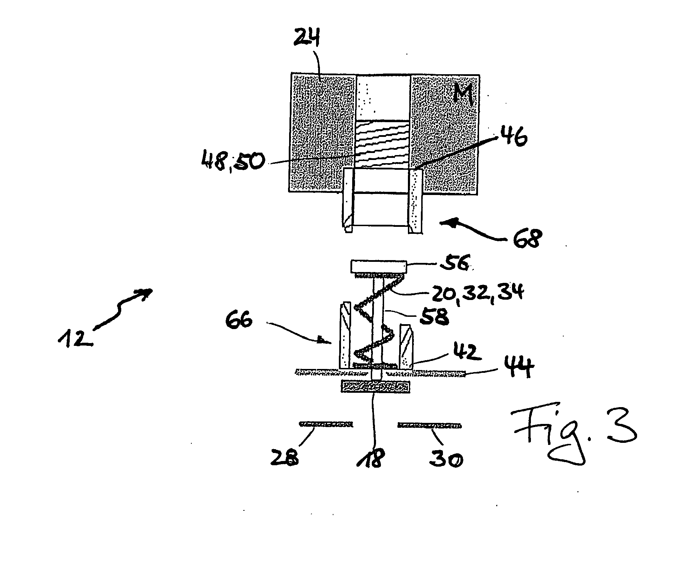

Fig. 3 shows a cross-sectional view through the interrupter device 12 in the triggered and activated state.

When the retaining device 22 breaks at the braking points 62, it splits into the at least two parts 66, 68. The first part 66 comprises at least the end 40 of the one section 36 and the second part 68 comprises at least the other end 46 and the other section 48. Due to the resilience of the spring device 32, (a) the second part 68 and the mass element 24 where separated from the first part 66, the carrying structure 44 and the current carrying elements 28, 30 and (b) the switching element 18 lifts from these two carrying elements 28, 30. The electrical contact between the two current carrying elements 28, 30 and the current flow in the corresponding current path 10 is interrupted.

In other words: normally, a force applied by the adjusting bolt 50 compresses the spring device 32 and closes the interrupter switch 14.

When a shock force (F) applies on the x-axis (or the y-axis), the breakable tube-like element 38 of the retaining device 22 breaks/cracks at the breaking points 62, releasing the spring device 32.

When the spring device (the compressing spring 34) is released, it will disconnect the current carrying elements 28, 30 by removing the switching element 18.

The shock sensitivity of the device 12 can be changed by adjusting the mass M of the mass element, and by choosing the right tube thickness and/or depth of the groove(s) 64 defining the predetermined breaking point(s) 62.

The groove (s) 64 must be cut is such a way to permit a wedge effect in case of shock in the direction of the y-axis.

The current path 10 including the interrupter device 12 shown in Figs. 1 to 3 preferably is a current path of a supply circuit of an electric or hybrid-electric power train for a vehicle (not shown). The supply circuit further comprises at least one electrical energy storage device (not shown) and at least one electrical engine like an electric motor or generator.

Preferably, the supply circuit comprises at least two electrical energy storage devices (accumulators, batteries, power capacitors, etc. ), wherein the current path 10 or at least one of the current paths 10 is a current path for electrically connecting these electrical energy storage devices. An interrupter device 12 in at least one current path 10 between the energy storage devices will reduce the effective total voltage in case of a crash. The remaining voltage is much lower than 400 V.

While the invention has been illustrated and described in detail in the drawings and foregoing description, such illustration and description are to be considered illustrative or exemplary and not restrictive; the invention is not limited to the disclosed embodiments.

Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

## Claims

1. Interrupter device (12) for interrupting current flow in a current path (10), especially in a current path (10) of a supply circuit for an electric or hybrid-electric power train of a vehicle, in dependence of an acceleration of the device (12), the device (12) comprising an interrupter switch (14) and an acceleration detector (16) triggering the interrupter switch (14), wherein the interrupter switch (14) comprises a retaining device (22) for retaining the switch (14) in a current conducting state, **characterized in that**
the acceleration detector (16) comprises a mass element (24) for breaking the retaining device (22) upon acceleration along at least one predefined axis, wherein the breakage of the retaining device (22) triggers an activation of the interrupter switch (14) .

2. Interrupter device according to claim 1, wherein the retaining device (22) is a device made of ceramics and/or glass or at least comprises a breakable part made of ceramics and/or glass.

3. Interrupter device according to claim 1 or 2, wherein the retaining device (22) comprises at least one predetermined breaking point (62).

4. Interrupter device according to one of claims 1 to 3, wherein the mass element (24) is mounted on the retaining device (22).

5. Interrupter device according to one of claims 1 to 4, wherein the interrupter switch (14) further comprises a switching element (18) for carrying the current in the current conducting state and an actuator (20) for shifting the switching element (18) after the triggering.

6. Interrupter device according to one of claims 1 to 5, wherein the actuator (20) is a spring device (32), especially a compression spring (34).

7. Interrupter device according to one of claims 1 to 6, wherein the retaining device (22) comprises a tube-like element (38) .

8. Interrupter device according to claim 7, wherein the actuator (20) is located in the interior of the tube-like element (38) .

9. Supply circuit of an electric or hybrid-electric power train for a vehicle, comprising at least one electrical energy storage device and at least one current path (10) including an interrupter device (12) according to at least one of claims 1 to 8.

10. Supply circuit according to claim 9, comprising at least two electrical energy storage devices, wherein the current path (10) or at least one of the current paths (10) is a current path for electrical connecting the electrical energy storage devices.
